# EUROPEAN PATENT APPLICATION

(11) **EP 2 482 002 A1**
(43) Date of publication of application: **01.08.2012**
(21) Application number: 09849769.6
(22) Date of filing: 30.11.2009
(51) Int. Cl.: F24J 2/42, F01K 25/10, F24J 2/00, H01L 31/04

(54) **HEAT PUMP POWER GENERATION SYSTEM**

(30) Priority: 24.09.2009 JP 2009218406
(71) Applicant: Hitachi, Ltd., Chiyoda-ku Tokyo 100-8280 (JP)
(72) Inventor: YASHIKI, Tatsuro, Chiyoda-ku, Tokyo 100-8220 (JP); NAGAFUCHI, Naoyuki, Chiyoda-ku, Tokyo 100-8220 (JP)
(74) Representative: MERH-IP Matias Erny Reichl Hoffmann
(86) International application number: PCT/JP2009/006457
(87) International publication number: WO 2011/036738

(57) **Abstract**

A heat pump power generation system is provided that can generate electricity by efficiently using solar energy in a wide wavelength range including a visible light range and an infrared range.

The heat pump power generation system includes a collector 1 for collecting solar light and solar heat; a power generation panel 8 for generating electricity by receiving the solar light collected by the collector; a switching unit 9 for providing switching control on a place to deliver heat energy collected by the collector or of cold energy generated by cooling; a heat accumulating device 4, 10 for accumulating the cooling energy or the heat energy going through the switching unit: and a heat pump generator 11 for generating electricity by using, as a heat source, the cold energy or heat energy accumulated in the heat accumulating device.

## Description

### Technical Field

The present invention relates to a heat pump power generation system using solar heat and solar light.

### Background Art

One of conventional technologies relating to a system using a combination of solar heat and solar light is described in e.g. patent document 1. Patent document 1 describes a system including a hybrid solar heat collector; a high-temperature heat accumulating tank and a low-temperature heat accumulating tank; and a heat pump. The hybrid solar heat collector performs solar light power generation and solar heat concentration. The heat pump uses the low-temperature accumulating tank as a low-temperature side heat source to raise the temperature inside the high-temperature accumulating tank. The heat pump is used as a heat source for hot-water supply.

### Prior-art Document

### Patent Document

Patent document 1: JP-7-234020-A

### Summary of the Invention

### Problem to be Solved by the Invention

Incidentally, the conventional solar light power generation system generates electricity by using solar energy in the wavelength range corresponding to a visible light range; however, this system does not use solar energy in the wavelength range corresponding to an infrared range. Meanwhile, the conventional solar heat power generation system uses solar energy in the wavelength of an infrared range to generate electricity; however, this system does not use solar energy in the wavelength range corresponding to a visible light range.

It is an object of the present invention to provide a heat pump power generation system that can efficiently use solar energy for power generation, the solar energy being in a wide wavelength range including a visible light range and an infrared range.

### Means for Solving the Problem

To achieve the above object, the present invention is a heat pump power generation system using solar light and solar heat, including a collector for collecting solar light and solar heat; a power generation panel for generating electricity by receiving the solar light collected by the collector; a switching unit for providing switching control on a place to deliver heat energy collected by the collector or of cold energy generated by cooling; a heat accumulating device for accumulating cold energy or heat energy going through the switching unit; and a heat pump generator for generating electricity by using, as a heat source, the cold energy or heat energy accumulated by the heat accumulating device.

### Effect of the Invention

The present invention can provide a heat pump power generation system that efficiently uses solar energy for power generation, with the solar energy being associated with a wide wavelength range including a visible light range and an infrared range.

### Brief Description of Drawings

[Fig. 1]

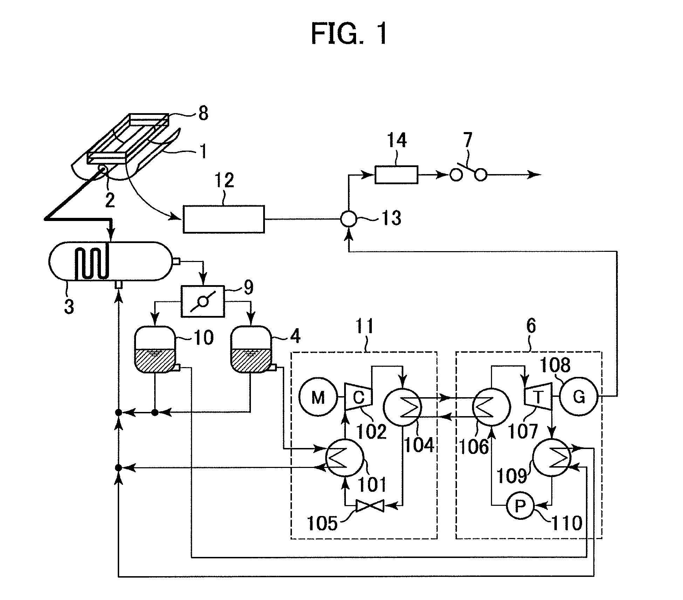

   Fig. 1 is a schematic diagram of a heat pump power generation system according to a first embodiment of the present invention.
[Fig. 2]

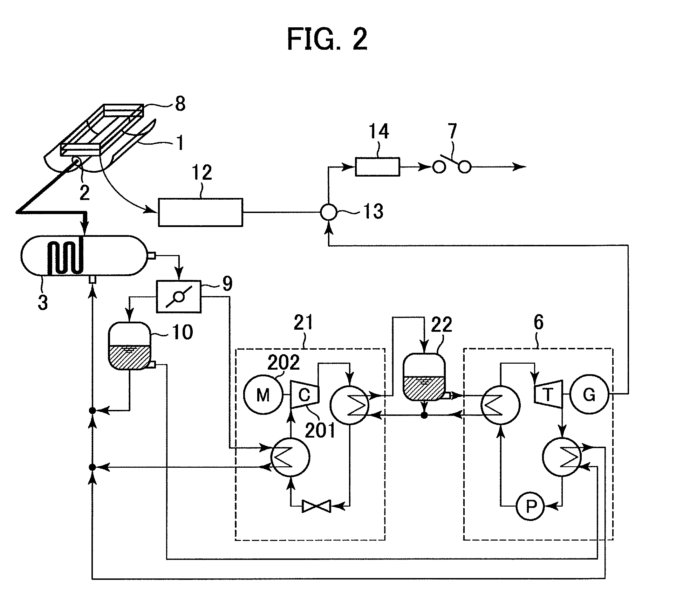

   Fig. 2 is a schematic diagram of a heat pump power generation system according to a second embodiment of the present invention.
[Fig. 3]

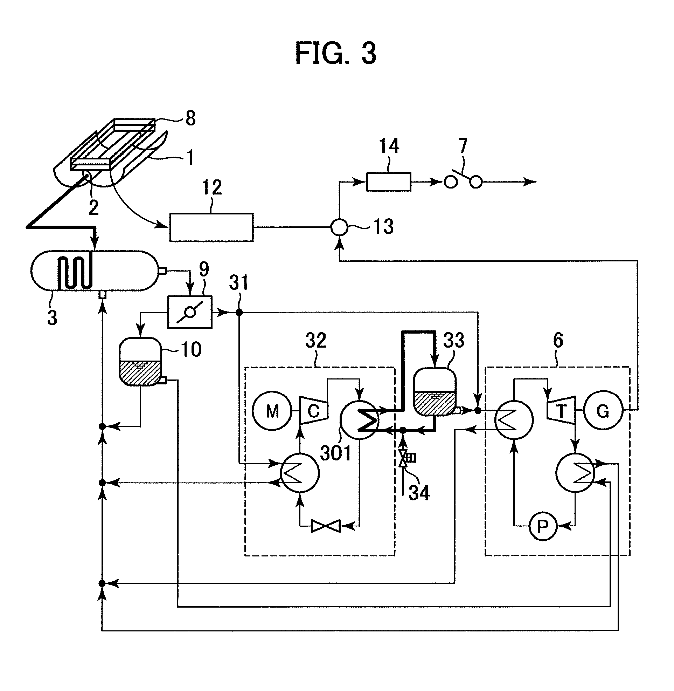

   Fig. 3 is a schematic diagram of a heat pump power generation system according to a third embodiment of the present invention.
[Fig. 4]

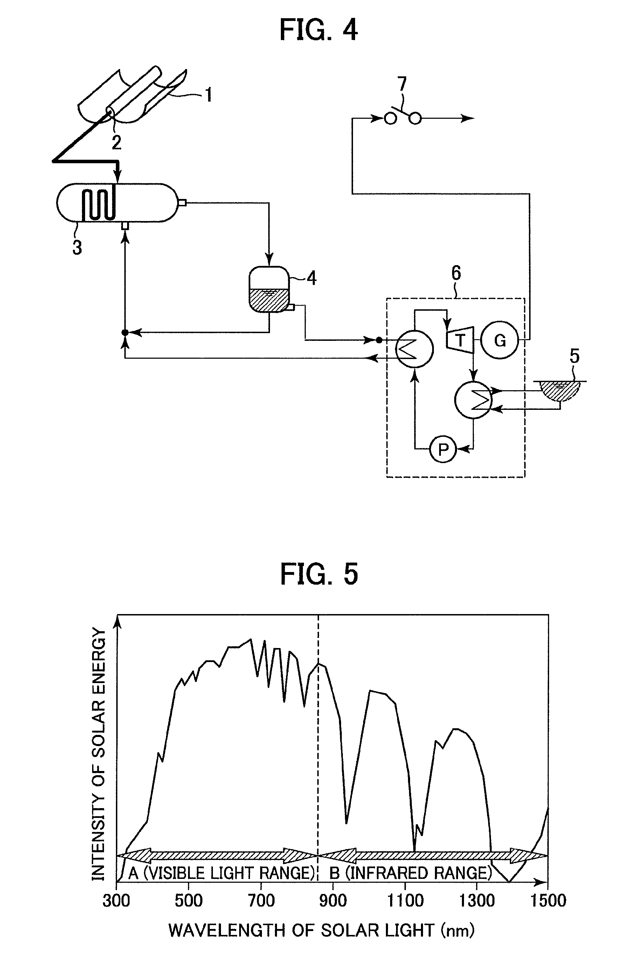

   Fig. 4 is a schematic diagram of a general solar heat power generation system.
[Fig. 5]
   Fig. 5 is a distribution chart of the intensity of solar energy with respect to the wavelength of solar light.

### Mode for Carrying Out the Invention

Examples of a power generation system using solar energy include a solar light power generation system and a solar heat power generation system. The solar light power generation system generates electricity directly from solar light energy by means of a solar battery. The solar heat power generation system collects solar light, evaporates water with the heat of the collected solar light and rotates a steam turbine with the steam for power generation. A general solar heat power generation system is described as a comparative example with respect to the present embodiment with reference to Fig. 4.

Fig. 4 is a schematic diagram of a general solar heat power generation system. The solar heat power generation system shown in the figure includes a compound parabolic collector 1 which collects solar light; a heat collecting tube 2 which allows a heat medium to absorb the heat energy collected with the compound parabolic collector 1; a heat exchanger 3 which generates heat energy through heat exchange with the heat medium increased in temperature by the combined parabolic collector 1; a heat accumulator 4 which accumulates heat energy generated by the heat exchanger 3; a Rankine cycle 6 which generates electric power by using the heat energy of the heat accumulator 4 and the cold energy of sea water 5; and a breaker 7 which interrupts electricity supplied from the Rankine cycle 6 to an electric power system.

The solar heat power generation system configured as above is operated as below. The combined parabolic collector 1 collects solar light and the heat collecting tube 2 allows the heat medium to absorb the collected solar light as heat energy. This heat medium is led to the heat exchanger 3 to generate heat energy, which is accumulated in the heat accumulator 4. The Rankine cycle 6 utilizes the heat accumulator 4 and sea water 5 as heat sources to generate electricity. This electricity is supplied to a system via the breaker 7.

Fig. 5 is a distribution chart of the intensity of solar energy with respect to the wavelength of solar light. General solar light power generation systems use solar energy in the wavelength range corresponding to range A (a visible light range) to generate electricity. However, they do not use solar energy in the wavelength range corresponding to range B (an infrared range). On the other hand, general solar heat power generation systems use the solar energy in the range B; however, they do not use the solar energy in the range A.

The heat pump power generation systems of the present embodiments provide heat pump power generation systems that efficiently use solar energy in the wide wavelength range including a visible light range and an infrared range.

The embodiments of the present invention are hereinafter described with reference to the drawings.

### Embodiment 1

Fig. 1 is a schematic diagram of a heat pump power generation system according to a first embodiment of the present invention. The heat pump power generation system of the present embodiment includes a combined parabolic collector 1 which collects solar light; a double-sided photovoltaic panel 8 which generates electricity by using the solar light collected by the combined parabolic collector 1; a heat collecting tube 2 which allows a heat medium to absorb heat energy collected by the combined parabolic collector 1; a heat exchanger 3 which generates heat energy through heat exchange with the heat medium increased in temperature by the combined parabolic collector 1 or generates cold energy through heat exchange with the heat medium cooled by radiative cooling; a switching unit 9 which provides switching control on a place to deliver the heat energy or cold energy obtained by the heat exchanger 3; a heat accumulator 4 which accumulates the heat energy supplied from the heat exchanger 3 via the switching unit 9, a cold accumulator 10 which similarly accumulates the cold energy supplied via the switching unit 9; a heat pump cycle 11 which uses as a heat source the heat energy accumulated in the accumulator 4; and a Rankine cycle 6 which uses as a heat source the heat serving as the output of the heat pump cycle 11 to generate electricity.

A system is configured such that the heat energy accumulated in the heat accumulator 4 is supplied to the heat pump cycle 11 as described later and then supplied to the heat exchanger 3. In addition, a system is also provided which directly supplies the heat energy to the heat exchanger 3 from the heat accumulator 4. Similarly, the heat pump power generation system includes a system in which the cold energy of the cold accumulator 10 is supplied to the heat exchanger 3 via the Rankine cycle 6 and a system in which the cold energy is directly supplied to the heat exchanger 3 not via the Rankine cycle 6.

Additionally, the heat pump power generation system in the present embodiment includes an inverter 12 which regulates the frequency of electricity generated by the double-sided photovoltaic panel 8; a synchronizer 13 which synchronizes the frequency of the electricity generated in the Rankine cycle 6 with that of the electricity regulated in frequency by the inverter 12; a regulator 14 which regulates the voltage and current of the electricity synchronized in the synchronizer 13; and a breaker 7 adapted to supply to a system the electricity outputted from the regulator 14 or to interrupt the electricity.

A description is next given of the detailed configuration of the heat pump 11 constituting a heat pump generator. The heat pump 11 includes an evaporator 101 which receives, as a heat source for its working medium, the heat energy accumulated in the heat accumulator 4; a compressor 102 which compresses the working medium in a gas-phase state brought through evaporation in the evaporator 101; a condenser 104 which condenses the working medium brought to high temperature and pressure in the compressor 102; and an expansion valve 105 which expanses the high temperature and pressure working medium in a liquid-phase state in the condenser 104. The working medium brought to a low temperature and pressure liquid-phase state by the expansion valve 105 is supplied to the evaporator 101. Incidentally, in the condenser 104 a medium is subjected to heat exchange with the low temperature medium supplied from the Rankine cycle 6 described later and is brought to high temperature through heat exchange with the working medium of the heat pump cycle. This medium is again supplied to the Rankine cycle 6 as a heat source for the Rankine cycle 6.

The detailed configuration of the Rankine cycle 6 constituting the heat pump generator is as below. The Ranking cycle 6 includes an evaporator 106 which brings about heat exchange between a working medium in the liquid-phase state of the Rankine cycle and a medium having high temperature heat supplied from the heat pump 11; a turbine 107 which adiabatically expands the working medium brought into a high temperature and pressure gas-phase state in the evaporator 106; a generator 108 which is driven by the turbine 107 to generate electricity; a condenser 109 which condenses the working medium brought into the expanded gas-phase state by the turbine 107 by means of cold energy supplied from the cold accumulator 10; and a pump 110 which increases the pressure of the working medium brought into the liquid-phase state by the condenser 109.

A description is given of the operation of the heat pump power generation system configured as above. The combined parabolic collector 1 collects solar light and the heat collecting tube 2 allows the heat medium to absorb the collected solar light as heat energy, while the double-sided photovoltaic panel 8 generates electricity. The heat medium inside the heat collecting tube 2 absorbs heat energy to come into a high-temperature state during the daytime in which light radiates from the sun. However, during the nighttime in which light does not radiate from the sun, the heat medium releases the heat energy through radiative cooling to come into a low-temperature state. This heat medium is led to the heat exchanger 3 to generate heat energy during the daytime and cold energy during the nighttime. The heat from the heat exchanger 3 is switched by the day-night switching unit 9 which switches depending on the time of heat energy generation (daytime) and the time of cold energy generation (nighttime). Specifically, the heat energy from the heat exchanger 3 is accumulated in the heat accumulator 4 and the cold energy is accumulated in the cold accumulator 10.

The heat pump 11 generates heat by using the heat energy accumulated in the heat accumulator 4 as a heat source. More specifically, the working medium, in the liquid-phase state, of the heat pump 11 flowing into the evaporator 101 is heated and evaporated in the evaporator 101 by the heat energy supplied from the heat accumulator 4 and comes into a low temperature and pressure gas-phase state. The working medium in the compressor 102 is adiabatically compressed to come into a high temperature and pressure gas-phase state. The working medium in the condenser 104 is cooled and condensed to come into a high pressure liquid-phase state and generates heat outwardly. The working medium in the expansion valve 105 is subjected to throttle expansion to come into a low temperature and pressure liquid-phase state.

The Rankine cycle 6 uses, as heat sources, the heat generated by the heat pump 11 and the cold energy accumulated in the cold accumulator 10 to generate electricity. More specifically, the working medium, in the liquid-phase state, of the Rankine cycle 6 flowing into the evaporator 106 is heated and evaporated by the heat generated by the heat pump 11 to come into the high temperature and pressure gas-phase state. The working medium in the turbine 107 is adiabatically expanded to come into the low temperature and pressure gas-phase state and also drives the generator 108 to generate electricity. The working medium in the condenser 109 is cooled and condensed by the cold energy supplied from the cold accumulator 10 to come into the liquid-phase state. The working medium in the pump 110 is adiabatically expanded to come into the high pressure liquid-phase state.

The inverter 12 regulates the frequency of the electricity generated by the double-sided photovoltaic panel 8. The synchronizer 13 synchronizes the frequency of the electricity from the Rankine cycle 6 with that of the electricity from the inverter 12. The regulator 14 regulates voltage and current and the breaker 7 supplies the generated electricity to the system.

In the present embodiment, the heat collecting tube 2 absorbs the solar energy in the wavelength range corresponding to an infrared range and the Rankine cycle 6 generates electricity. In the meantime, the double-sided photovoltaic panel 8 absorbs the solar energy of the visible light range and generates electricity. In this way, it is possible to generate electricity by efficiently using the solar energy in the wide wavelength range including the visible light range and the infrared range. Combining of the solar heat power generation with the solar light power generation can improve power output compared with the conventional power generation system using conventional solar energy.

In the Rankine cycle 6, the higher the temperature of the high-temperature heat source is and/or the lower the temperature of the low-temperature heat source is, the more power generation efficiency is increased. In the present embodiment, the Rankine cycle 6 generates electricity by using, as the high-temperature heat source, the heat generated by the heat pump 11 while the Rankine cycle 6 generates electricity by using, as the low-temperature source, the cold energy accumulated in the cold accumulator 10. That is to say, if the high-temperature heat source of the Rankine cycle 6 is paid attention to, the heat energy accumulated in the heat accumulator 4 is the heat source in the example of Fig. 4. However, in the present embodiment, the high-temperature medium which is the output power of the heat pump 11 is used as the heat source. The heat generated in this heat pump 11 has temperature higher than that of the heat energy of the heat accumulator 4. Therefore, the Rankine cycle 6 is advantageous in terms of power generation efficiency. If the low-temperature heat source of the Rankine cycle 6 is paid attention to, sea water 5 is used as the heat source in the example of Fig. 4. However, in the present embodiment, the cold energy of the cold accumulator 10 is one cooled by radiative cooling during the nighttime. Therefore, the cold energy of the cold accumulator 10 can be made to have lower temperature. Accordingly, the present embodiment can more improve the power generation efficiency than the conventional power generation system.

When a plant is started up, the conventional solar power generation system using the Rankine cycle 6 takes time to drive a generator to generate electricity since a working medium has been started to evaporate. Thus, there is a problem of the increased start-up time of the plant. However, in the present invention, the double-sided photovoltaic panel can generate electricity at the same time of starting up the plant. Thus, the start-up time of the plant can be shortened.

The present embodiment described above can provide the heat pump power generation system that can efficiently use solar energy for power generation, the solar energy having the wide wavelength range including the visible light range and the infrared range.

### Embodiment 2

A second embodiment of the present invention is next described with reference to Fig. 2.
In the embodiment of Fig. 1, the heat energy from the day-night switching unit 9 is accumulated in the heat accumulator 4. The accumulated heat energy is used as the heat source to generate heat in the heat pump 11. The generated heat is used as the high-temperature heat source to generate electricity in the Rankin cycle 6. On the other hand, the present embodiment is configured as below. Heat energy from a day-night switching unit 9 is used as a heat source to generate heat in a heat pump 21. The generated heat is accumulated in a heat accumulator 22. The accumulated heat is used as a high-temperature heat source to generate electricity in the Rankine cycle 6.

In the present embodiment, the heat energy necessary to operate the Rankine cycle 6 is accumulated in the heat accumulator 22. Given that the Rankine cycle 6 may continuously be operated. In such a case, while the heat energy is accumulated in the heat accumulator 22, the heat energy can be supplied from the heat accumulator 22 to the Rankine cycle 6 even if the heat pump 21 is not operated. Therefore, the operating time of the heat pump 21 can be reduced. Accordingly, it is possible to reduce power that is needed by a motor 202 to operate a compressor 201.

### Embodiment 3

A third embodiment of the present invention is described with reference to Fig. 3.
The present embodiment is characterized by the following configuration. Heat energy from a day-night switching unit 9 is bifurcated into two at a bifurcation 31. One of the bifurcated heat energy is used as a high-temperature heat source to generate electricity in a Rankine cycle 6. Meanwhile, the other bifurcated heat is used as a heat source to generate heat in a heat pump 32 and the generated heat is accumulated in a heat accumulator 33. The heat energy accumulated in the heat accumulator 33 is supplied to the Rankine cycle 6 so as to make an electric quantity to be supplied to a system via a breaker 7 constant. In this way, the electric quantity generated in the Rankine cycle 6 is regulated. When the heat energy is supplied to the Rankine cycle 6, fluid is supplied from a valve 34 thereto so as to make a flow rate of fluid in a closed path (a heavy line in Fig. 3) between a condenser 301 and the heat accumulator 33 constant.

It is difficult for the conventional solar light power generation system or solar thermal power generation system to keep constant electric quantity which is to be supplied to the system because of a variation in the irradiance level of solar light. In contrast to this, the present embodiment can regulate the quantity of electricity generated in the Rankine cycle 6 by appropriately supplying the heat energy accumulated in the heat accumulator 33 to the Rankine cycle 6. Thus, it is possible to keep constant quantity of electricity to be supplied to the system.

### Industrial Applicability

The present invention can be used for heat pump power generation systems using solar light and solar heat for power generation.

### Explanation of Reference Numerals

- 1: Combined parabolic collector
- 2: Heat collecting tube
- 3: Heat exchanger
- 4, 22, 33: Heat accumulator
- 5: Sea water
- 6: Rankine cycle
- 7: Breaker
- 8: Double-sided photovoltaic panel
- 9: Day-night switching unit
- 10: Cold accumulator
- 11, 21, 32: Heat pump
- 12: Inverter
- 13: Synchronizer
- 14: Regulator
- 31: Bifurcation
- 34: Valve
- 101, 106: Evaporator
- 102, 201: Compressor
- 103, 202: Motor
- 104, 109, 301: Condenser
- 105: Expansion valve
- 107: Turbine
- 108: Generator
- 110: Pump

## Claims

1. A heat pump power generation system using solar light and solar heat, comprising:
a collector for collecting solar light and solar heat;
a power generation panel for receiving the solar light collected by the collector and generating electricity;
a switching unit for providing switching control on a place to deliver the heat energy generated by the collector or the cold energy generated by cooling;
a heat accumulating device for accumulating the cold energy or heat energy going through the switching unit; and
a heat pump generator for generating electricity by using, as a heat source, cold energy or heat energy accumulated by the accumulating device.

2. A heat pump power generation system using solar light and solar heat, comprising:
a collector for collecting solar light and solar heat;
a power generation panel generating electricity by using solar energy collected by the collector, the solar energy falling in a wavelength range corresponding to a visible light range;
a switching unit for providing switching control on a place to deliver the heat energy or the cold energy generated by using solar energy collected by the collector, the solar energy falling in a wavelength range corresponding to an infrared range;
a heat accumulating device for accumulating the cold energy or heat energy going through the switching unit; and
a heat pump generator for generating electricity by using, as a heat source, cold energy or heat energy accumulated by the accumulating device.

3. A heat pump power generation system using solar light and solar heat, comprising:
a collector for collecting solar light;
a power generation panel for receiving the solar light collected by the collector and generating electricity;
a heat collecting tube heated by solar light collected by the collector;
a heat exchanger connected to the heat collecting tube;
a switching unit for providing switching control on a place to deliver cold energy and heat energy recovered by the heat exchanger;
a cold accumulator for accumulating the cold energy;
a heat accumulator for accumulating the heat energy;
a heat pump generator for generating electricity by using, as a heat source, cold energy accumulated in the cold accumulator or heat energy accumulated by the heat accumulator.
an inverter for regulating frequency for electricity generated by the power generation panel;
a synchronizer for synchronizing the frequencies for electricity generated by the inverter and the heat pump generator with each other;
a regulator for regulating voltage and current of the electricity synchronized by the synchronizer; and
a breaker for interrupting supply of the electricity going through the regulator to a system.

4. The heat pump power generation system according to claim 1,
wherein the heat accumulating device includes a heat accumulator accumulating heat energy and a cold accumulator accumulating cold energy.

5. The heat pump power generation system according to claim 1,
wherein the switching unit switches to the heat energy generated by collecting solar heat during sunlight radiation hours and to the cold energy generated by cooling during sunlight non-radiation hours.

6. The heat pump power generation system according to claim 1,
wherein the heat pump generator is composed by combining a heat pump cycle with a Ranking cycle, the heat pump cycle uses the heat energy as a heat source and outputs heat higher in temperature than the heat energy, and the Rankine cycle generates electricity by using, as heat sources, heat outputted from the heat pump cycle and the cold energy.

7. The heat pump power generation system according to claim 4
wherein the switching unit switches to supply the heat energy to the heat accumulator or to directly supply the heat energy as a heat source for the heat pump generator to the heat pump generator during sunlight radiation hours and to supply the cold energy to a cold accumulator during sunlight non-radiation hours.

8. The heat pump power generation system according to claim 4,
wherein the heat pump generator is composed by combining a heat pump cycle with a Ranking cycle, the heat pump cycle uses, as a heat source, heat energy supplied from the switching unit to generate heat and supplies the heat to the heat accumulator and the Rankine cycle generates electricity by using, as heat sources, the heat energy of the heat accumulator and cold energy of the cold accumulator.

9. The heat pump power generation system according to claim 4,
wherein the heat pump generator is composed by combining a heat pump cycle with a Ranking cycle, the heat pump cycle supplies heat generated by using, as a heat source, one heat energy bifurcated through the switching unit to the heat accumulator, and the Rankine cycle generates electricity by using, as heat sources, the heat energy of the heat accumulator or the other bifurcated heat energy and the cold energy of the cold accumulator.

10. The heat pump power generation system according to claim 8 or 9,
wherein the heat accumulator supplies heat energy accumulated therein to the Rankine cycle so as to make electricity generated in the heat pump generator constant.
